(19) **Europäisches Patentamt / European Patent Office / Office européen des brevets**

(11) **EP 3 179 070 B1**

(12) **FASCICULE DE BREVET EUROPEEN**

(45) Date de publication et mention
de la délivrance du brevet:
**12.09.2018 Bulletin 2018/37**

(51) Int Cl.:
**F02B 37/18** *(2006.01)* **F01N 5/00** *(2006.01)*

(21) Numéro de dépôt: **16200636.5**

(22) Date de dépôt: **25.11.2016**

(54) **SYSTEME MOTEUR AVEC SYSTEME DE RECUPERATION D'ENERGIE**

MOTORSYSTEM MIT ENERGIERÜCKGEWINNUNGSSYSTEM

MOTOR SYSTEM WITH ENERGY RECOVERY SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.11.2015 FR 1561542**

(43) Date de publication de la demande:
**14.06.2017 Bulletin 2017/24**

(73) Titulaire: **Valeo Systemes de Controle Moteur
95800 Cergy Saint Christophe (FR)**

(72) Inventeurs:
• **ANGELOT, Pierre-Julian
78500 SARTROUVILLE (FR)**

• **COPPIN, Thomas
95000 CERGY (FR)**

(74) Mandataire: **Garcia, Christine
Propriété Intellectuelle
Valeo Systèmes de Contrôle Moteur
14, avenue des Béguines
95800 Cergy St Christophe (FR)**

(56) Documents cités:
| | |
|---|---|
| EP-A1- 2 789 826 | WO-A1-2008/062254 |
| WO-A1-2014/091235 | WO-A1-2014/170559 |
| DE-A1- 3 807 372 | DE-A1-102008 064 521 |
| DE-U1-202015 103 048 | FR-A1- 3 005 996 |
| US-A1- 2007 175 215 | |

**Description**

La présente invention concerne les moteurs à combustion interne, et plus particulièrement un ensemble moteur avec circuit d'air et turbocompresseur.

De nombreux moteurs diesel, essence, gaz ou éthanol, et plus généralement les moteurs à allumage par compression ou commandé, équipant les véhicules automobiles sont équipés de turbocompresseurs pour augmenter la pression des gaz admis. Ces turbocompresseurs comportent un compresseur d'air entraîné par une turbine animée par la pression des gaz d'échappement.

L'invention s'intéresse plus particulièrement aux architectures comportant une boucle d'air d'un moteur suralimenté par turbocompresseur comportant un circuit de décharge avec une vanne en parallèle de la turbine du turbocompresseur.

La vanne de décharge permet par son ouverture de dériver de la turbine une partie des gaz d'échappement afin de réguler la puissance d'entraînement du turbocompresseur. Ceci évite des dommages au turbocompresseur et limite la pression à l'admission aux besoins du moteur.

Un inconvénient de ces architectures provient de la perte d'énergie au niveau du circuit de décharge.

Le document DE202015103048U1 décrit un système moteur dans lequel le circuit de décharge de la turbine du turbocompresseur comporte une turbine de récupération d'énergie.

La présente invention a donc pour objet de pallier un ou plusieurs des inconvénients des dispositifs de l'art antérieur en proposant un ensemble moteur comportant un circuit de décharge permettant une récupération d'énergie.

Pour cela la présente invention propose un système moteur comportant un moteur thermique équipé d'un circuit d'échappement disposé en sortie du moteur thermique, d'un turbocompresseur comportant un compresseur d'air entraîné par une turbine, et équipé d'un circuit haute pression de recirculation des gaz brulés, le circuit d'échappement comportant un circuit de décharge de la turbine du turbocompresseur, dans lequel le circuit de décharge comporte un système de récupération d'énergie et dans lequel le système de récupération d'énergie est une double turbine disposée sur le circuit de recirculation et sur le circuit de décharge.

Une telle configuration permet de récupérer l'enthalpie dérivée dans le circuit de recirculation haute pression, et dans le circuit de décharge.

Selon un mode de réalisation de l'invention, le système comporte une vanne disposée en début ou en aval du circuit de décharge, à la jonction entre le circuit d'échappement et le circuit de décharge.

Selon un mode de réalisation de l'invention, le système comporte au moins une vanne trois voies disposée en début ou en aval du circuit de décharge, au niveau de la jonction entre le circuit d'échappement et le circuit de décharge.

Selon un mode de réalisation de l'invention, la turbine de récupération d'énergie est accouplée à un générateur électrique.

Selon un mode de réalisation de l'invention, le moteur thermique est un moteur à allumage par compression ou commandé.

L'invention concerne également un véhicule équipé d'un système moteur tel que défini selon l'invention.

D'autres buts, caractéristiques et avantages de l'invention seront mieux compris et apparaîtront plus clairement à la lecture de la description faite, ci-après, en se référant aux figures annexées, données à titre d'exemple et dans lesquelles:

- la figure 1 représente un système moteur avec un système de récupération d'énergie selon l'état de la technique,
- la figure 2 représente un système moteur avec un système de récupération d'énergie, selon un mode de réalisation de l'invention,
- la figure 3 est une représentation schématique du fonctionnement de l'invention avec deux systèmes de récupération d'énergie.
- la figure 4 illustre le gain potentiel en consommation des différents modes de réalisations de l'invention.

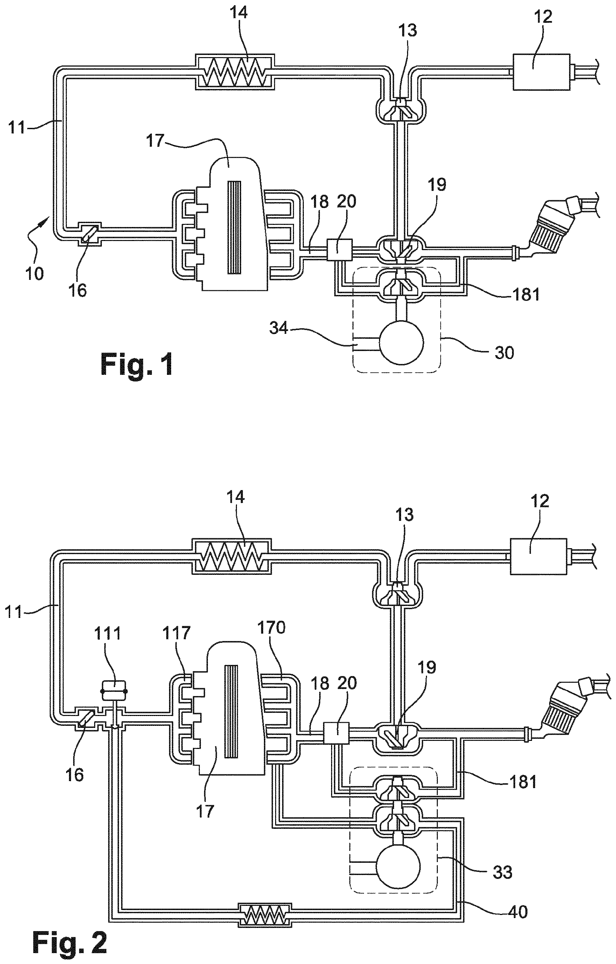

L'architecture représentée sur la figure 1, encore appelée système moteur (10), comporte un moteur thermique à combustion interne 17 relié à un circuit 11 d'admission d'air dans le moteur. Le circuit d'admission comporte un filtre à air 12 en entrée.

Le moteur thermique 17 est un moteur diesel, essence, gaz ou éthanol, et plus généralement un moteur à allumage par compression ou commandé.

Le système moteur (10) comporte un compresseur 13 de turbocompresseur pour comprimer l'air destiné au moteur et un refroidisseur 14 en aval du compresseur 13, pour refroidir l'air de suralimentation. Le moteur 17 est relié à un circuit d'échappement 18 qui comporte une turbine 19 de turbocompresseur, entraînée par les gaz d'échappement, accouplée au compresseur 13 de suralimentation pour l'entraîner en rotation.

Le couplage entre la turbine 19 du compresseur et le compresseur 13 est mécanique ou électrique.

L'architecture comporte un dispositif de réglage de débit 16, tel que par exemple une vanne papillon, qui permet de contrôler le débit d'air admis dans le moteur à combustion interne 17.

Le circuit d'échappement 18, comporte un circuit de décharge 181. Ce circuit de décharge 181 prend sa source dans le conduit d'échappement 18 en sortie du moteur 17 et débouche en aval de la turbine 19 de turbocompresseur. Ce circuit 181 de décharge permet de dériver de la turbine 19 du compresseur une partie des gaz d'échappement afin de limiter la puissance d'entraînement du turbocompresseur. Ceci évite des dommages au turbocompresseur et limite la pression à l'admission aux besoins du moteur.

Une vanne de décharge est disposée dans le circuit de décharge 181.

Un système 30, 33 de récupération d'énergie est placé sur le circuit de décharge 181 illustré figure 1 et 2.

Le système de récupération d'énergie est une turbine, simple 30 ou double 33.

La présence de cette turbine 30, 33 de récupération d'énergie permet, lorsqu'elle est couplée à un générateur électrique 34, de récupérer l'enthalpie dérivée au niveau du circuit de décharge du turbocompresseur.

Selon un mode de réalisation de l'invention, dans le cas d'un moteur équipé d'un circuit 40 de recirculation des gaz de d'échappement, la turbine 30, 33 de récupération est une turbine de récupération double afin de récupérer également l'enthalpie normalement perdue dans la vanne de contrôle du débit des gaz recirculés comme illustré figure 2.

Dans la suite de la description, les éléments identiques ou assurant la même fonction que ceux de la figure 1 portent les mêmes numéros de référence. Bien que faisant partie de l'invention, ces éléments ne seront pas décrits à nouveau.

Selon ce mode de réalisation, illustré figure 2, le circuit 40 de recirculation est haute pression, prend sa source en sortie du moteur, par exemple au niveau du collecteur d'échappement 170, et débouche en amont du moteur, par exemple en amont du collecteur d'admission 117 au niveau de la vanne 111 de recirculation des gaz. La turbine 33 double est disposée sur le circuit 40 de recirculation et sur le circuit de décharge.

Une telle configuration permet de récupérer l'enthalpie dérivée dans le circuit de recirculation haute pression, et dans le circuit de décharge 181.

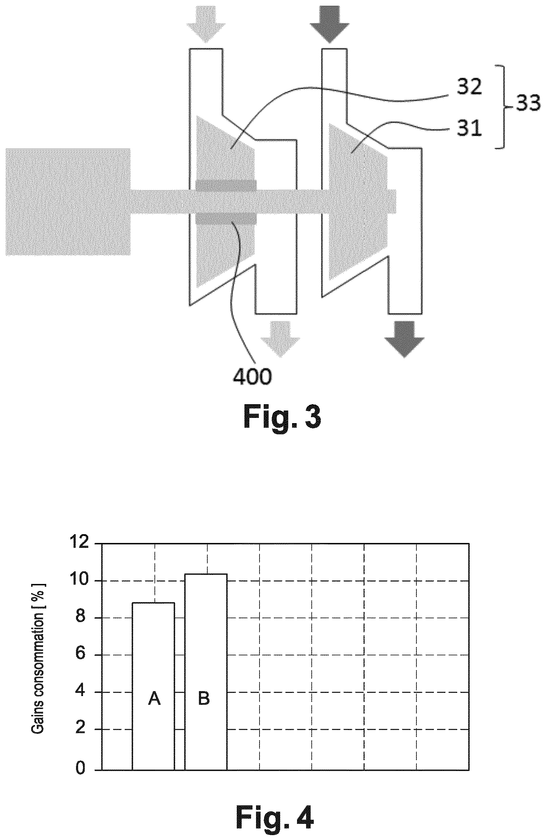

La double turbine 33 employée dans le cadre de l'invention est une double turbine 33 comportant deux turbines 31, 32 couplées avec un système 400 de couplage mécanique comme illustré figure 3. La première turbine est une turbine 31 de récupération d'énergie du circuit 181 de décharge, la deuxième turbine est une turbine 32 de récupération d'énergie du circuit 40 de recirculation des gaz d'échappement.

Plusieurs systèmes de couplage mécanique peuvent être envisagés entre les deux turbines 31, 32 de récupération :

- une liaison rigide : solution simple,
- un embrayage : cette solution permet de découpler les deux turbines lorsqu'un seul mode de récupération est possible,
- une roue libre : le système s'autorégule sans ajout d'actionneur. Dans les phases sans récupération, la turbine est laissée libre en rotation, tandis que la roue libre se bloque pour entraîner le générateur dans les autres cas de figure.

Dans tous les modes de réalisation de l'invention, une vanne 20 trois voies est disposée en début ou en aval du circuit 181 de décharge, au niveau de la jonction entre le circuit 18 d'échappement et le circuit 181 de décharge.

Selon un mode de réalisation de l'invention, la vanne trois voies est remplacée par deux vannes simples.

Cette vanne 20 trois voies permet :

- l'orientation du débit vers la turbine du turbocompresseur et vers la turbine de récupération dans les cas où l'enthalpie échappement est supérieure aux besoins du turbocompresseur, ce qui permet la récupération du débit dérivé.
- l'orientation du débit échappement vers la turbine seule, dans les cas où les besoins de suralimentation ne permettent pas de dériver du débit.
- l'orientation du débit vers la turbine de récupération seule, afin d'offrir la possibilité de récupérer de l'énergie à l'échappement dans les phases de fonctionnement où le moteur n'est pas suralimenté.

Dans les deux premiers cas de figure, la récupération d'énergie s'effectue sans modification des conditions de fonctionnement du moteur, en particulier sans accroissement de contrepression à l'échappement.

Le potentiel de récupération d'énergie d'un tel système selon l'invention peut s'écrire de la façon suivante :

- Dans le conduit de décharge, la puissance mécanique récupérée à la turbine s'exprime comme suit :

$$W_r = \eta_r Q_{wg} T_{ut} c p_{ut} \left\{ 1 - \left( \frac{P_{ut}}{P_{dt}} \right)^{\frac{1-\gamma}{\gamma}} \right\}$$

- Dans le circuit de recirculation haute pression, la puissance mécanique récupérée à la turbine s'exprime comme suit :

$$W_r = \eta_r Q_{egr} T_{ut} c p_{ut} \left\{ 1 - \left( \frac{P_{ur}}{P_{dr}} \right)^{\frac{1-\gamma}{\gamma}} \right\}$$

Avec

$cp$ : capacité calorifique des gaz à pression constante

$Q$ : débit massique

$P_u$ : pression en amont de l'élément considéré

$P_d$ : pression en aval de l'élément considéré

$W_t$ : puissance mécanique de la turbine du turbocompresseur

$WP_r$ : puissance mécanique de la turbine de récupération

$\eta$ : rendement isentropique

$X_t$ : turbine du turbocompresseur

$X_r$ : turbine de recuperation

$X_{wg}$ : circuit de décharge

$X_0$ : configuration de reference

$Xegr$ : circuit de recirculation

$\gamma$ : indice adiabatique du gaz considéré

Des simulations ont été effectuées sur un véhicule diesel en stabilisé à 130km/h. Leurs résultats sont illustrés sur la figure 4 et montrent un apport significatif en terme de gain de consommation pour les systèmes moteur selon l'invention. Sur cette figure A correspond à l'architecture de la figure 1, et B correspond à l'architecture de la figure 2.

L'invention s'applique à un moteur de véhicule terrestre, naval ou aérien, ainsi qu'aux moteurs de groupes électrogènes et à toutes autres applications utilisant un moteur thermique à turbocompresseur. Selon une variante de l'invention, le motuer comporte un circuit de recirculation haute pression des gaz brûlés.

La portée de la présente invention ne se limite pas aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

## Revendications

1. Système moteur (10) comportant un moteur thermique (17) équipé d'un circuit (18) d'échappement disposé en sortie du moteur thermique (17), d'un turbocompresseur comportant un compresseur d'air entraîné par une turbine, et équipé d'un circuit (40) haute pression de recirculation des gaz brulés, le circuit d'échappement (18) comportant un circuit de décharge (181) de la turbine (19) du turbocompresseur,

   **caractérisé en ce que** le circuit de décharge (181) comporte un système (30, 33) de récupération d'énergie et **en ce que** le système (30, 33) de récupération d'énergie est une double turbine disposée sur le circuit (40) de recirculation et sur le circuit (181) de décharge.

2. Système moteur (10) selon la revendication 1, comportant une vanne (20) disposée en début ou en aval du circuit (181) de décharge, à la jonction entre le circuit (18) d'échappement et le circuit (181) de décharge.

3. Système moteur (10) selon une des revendications 1 à 2, comportant au moins une vanne (20) trois voies disposée en début ou en aval du circuit (181) de décharge, au niveau de la jonction entre le circuit (18) d'échappement et le circuit (181) de décharge.

4. Système moteur (10) selon une des revendications 1 à 3, dans lequel la turbine (30, 33) de récupération d'énergie est accouplée à un générateur électrique (34).

5. Système moteur (10) selon une des revendications 1 à 4, dans lequel le moteur thermique (17) est un moteur à allumage par compression ou commandé.

6. Véhicule équipé d'un système moteur (10) tel que défini selon une des revendications 1 à 5.

## Patentansprüche

1. Motorsystem (10), umfassend einen Verbrennungsmotor (17), der mit einem Abgasstrang (18), der am Ausgang des Verbrennungsmotors (17) angeordnet ist, mit einem Turbolader ausgestattet ist, der einen Luftkompressor aufweist, der von einer Turbine angetrieben ist, und mit einem Hochdruckkreislauf (40) zur Abgasrückführung ausgestattet ist, wobei der Abgasstrang (18) einen Entladungskreis (181) der Turbine (19) des Turboladers aufweist,

   **dadurch gekennzeichnet, dass** der Entladungskreis (181) ein System (30, 33) zur Energierückgewinnung aufweist und dadurch, dass das System zur Energierückgewinnung (30, 33) eine Doppelturbine ist, die an dem Rückführungskreislauf (40) und an dem Entladungskreis (181) angeordnet ist.

2. Motorsystem (10) nach Anspruch 1, umfassend ein Ventil (20), das am Anfang oder nachgelagert nach dem Entladungskreis (181) an der Verbindungsstelle zwischen dem Abgasstrang (18) und dem Entladungskreis (181) angeordnet ist.

3. Motorsystem (10) nach einem der Ansprüche 1 bis 2, umfassend mindestens ein Dreiwegeventil (20), das am Anfang oder nachgelagert nach dem Entladungskreis (181) auf Ebene der Verbindungsstelle zwischen dem Abgasstrang (18) und dem Entladungskreis (181) angeordnet ist.

4. Motorsystem (10) nach einem der Ansprüche 1 bis 3, wobei die Turbine (30, 33) zur Energierückgewinnung mit einem elektrischen Generator (34) verbunden ist.

5. Motorsystem (10) nach einem der Ansprüche 1 bis 4, wobei der Verbrennungsmotor (17) ein Selbstzündungsmotor oder ein Fremdzündungsmotor ist.

**6.** Fahrzeug, das mit einem Motorsystem (10), wie nach einem der Ansprüche 1 bis 5 definiert, ausgestattet ist.

**Claims**

**1.** Engine system (10) comprising a combustion engine (17) equipped with an exhaust circuit (18) arranged at the outlet of the combustion engine (17), with a turbocharger comprising an air compressor driven by a turbine and equipped with a high-pressure exhaust gas recirculation circuit (40), the exhaust circuit (18) comprising a dump circuit (181) for bypassing the turbine (19) of the turbocharger, **characterized in that** the dump circuit (181) comprises an energy recovery system (30, 33) and **in that** the energy recovery system (30, 33) is a double turbine arranged on the recirculation circuit (40) and on the dump circuit (181) .

**2.** Engine system (10) according to Claim 1, comprising a valve (20) arranged at the start of or downstream of the dump circuit (181), where the exhaust circuit (18) and the dump circuit (181) join.

**3.** Engine system (10) according to one of Claims 1 and 2, comprising at least a three way valve (20) arranged at the start of or downstream of the dump circuit (181), where the exhaust circuit (18) and the dump circuit (181) join.

**4.** Engine system (10) according to one of Claims 1 to 3, in which the energy recovery turbine (30, 33) is coupled to an electric generator (34).

**5.** Engine system (10) according to one of Claims 1 to 4, in which the combustion engine (17) is a compression-ignition or controlled-ignition engine.

**6.** Vehicle equipped with an engine system (10) as defined in one of Claims 1 to 5.

**Fig. 1**

**Fig. 2**

32
31
33
400

# Fig. 3

Gains consommation [%]

12

10

8

6

4

2

0

A   B

# Fig. 4

## RÉFÉRENCES CITÉES DANS LA DESCRIPTION

**Documents brevets cités dans la description**

- DE 202015103048 U1